# FASCICULE DE BREVET EUROPEEN

(11) **EP 3 667 015 B1**
(45) Date de publication et mention de la délivrance du brevet: **06.10.2021**
(21) Numéro de dépôt: 19213051.6
(22) Date de dépôt: 03.12.2019
(51) Int. Cl.: F01D 5/00, F01D 25/28, B23Q 3/06, F01D 5/30

(54) **DISPOSITIF DE MAINTIEN POUR LE DÉMONTAGE D'UNE ROUE À AUBES DE TURBOMACHINE ET PROCÉDÉ L'UTILISANT**
HALTEVORRICHTUNG ZUR DEMONTAGE EINES TURBOMASCHINENSCHAUFELRADES UND VERFAHREN ZUR VERWENDUNG DIESER VORRICHTUNG
HOLDING DEVICE FOR DISMANTLING A TURBOMACHINE BLADE WHEEL, AND METHOD USING IT

(30) Priorité: 12.12.2018 FR 1872766
(43) Date de publication de la demande: 17.06.2020
(73) Titulaire: Safran Aircraft Engines, 75015 Paris (FR)
(72) Inventeur: DURAND, Yannick, 77550 Moissy-Cramayel (FR); DELAPORTE, Nicolas Daniel, 77550 Moissy-Cramayel (FR)
(74) Mandataire: Regimbeau

(56) Documents cités:
- EP-A1- 1 916 382
- EP-A1- 3 336 315
- GB-A- 2 438 385
- US-A1- 2014 356 173

## Description

L'invention concerne un dispositif de maintien pour le démontage d'une roue à aubes de turbomachine.

Un domaine d'application de l'invention concerne les turboréacteurs d'aéronefs.

Dans une telle roue à aube, les aubes sont maintenues en position grâce à un disque, sur lequel elles sont montées et grâce à un anneau de retenue, qui au niveau des pieds d'aube bloque axialement le déplacement des aubes.

L'anneau de retenue nécessite un remplacement périodique en raison de son usure en fonctionnement de la turbomachine. On cherche donc à proposer une solution permettant de remplacer facilement l'anneau de retenue sur la turbomachine.

Pour démonter l'anneau de retenue, une solution choisie est de disposer la turbine verticalement, avec donc la roue placée autour d'un axe vertical et l'amont de la roue tourné vers le haut.

Un des problèmes de cette solution est de maintenir en place des éléments amortisseurs lors du retrait de l'anneau de retenue à changer, puis lors du montage d'un nouvel anneau de retenue.

En effet, après le retrait de l'ancien anneau de retenue et avant le montage du nouvel anneau de retenue, les éléments amortisseurs ne sont plus maintenus en position et risquent fortement de sortir de leur logement, voire de tomber dans la turbomachine.

Le document GB-A-2438385 concerne un dispositif de traitement de surface d'une aube de soufflante de turbomachine.

L'invention cherche à proposer un dispositif de maintien pour le démontage d'une roue à aubes, ainsi qu'un procédé de démontage de la roue à aubes, qui permettent de résoudre ce problème de maintien des éléments amortisseurs en l'absence de l'anneau de retenue.

A cet effet, un premier objet de l'invention est un dispositif de maintien pour le démontage d'une roue à aubes de turbomachine afin d'ôter un anneau aval de retenue de la roue, lorsque la roue à aubes est disposée autour d'un axe vertical avec l'amont de la roue tourné vers le haut,

les aubes de la roue s'étendant radialement et étant destinées à être montées circonférentiellement autour d'un disque de la roue, la roue comportant pour chaque aube un élément amortisseur disposé dans une cavité débouchante radialement vers l'intérieur, laquelle est délimitée par une plateforme de l'aube et par une paroi intérieure amont de l'aube se terminant par une gorge amont, l'anneau aval de retenue étant logé dans une gorge aval de la plateforme de l'aube, la gorge amont et la gorge aval s'étendant radialement,
caractérisé en ce que le dispositif de maintien est destiné à être monté coaxialement à l'axe vertical et comporte :
- un secteur de bague inter-aubes, qui s'étend circonférentiellement et comprend un flanc s'étendant radialement, le secteur de bague étant configuré pour que le flanc puisse être inséré dans une pluralité des gorges amont adjacentes circonférentiellement,
- une pluralité de clips de retenue, chaque clip étant destiné à coopérer avec un des éléments amortisseurs, les clips s'étendant radialement en étant fixés circonférentiellement au secteur de bague.

Grâce à l'invention, le dispositif de maintien permet de maintenir en place les éléments amortisseurs de chaque roue lors du retrait de l'anneau de retenue à changer, puis lors du montage du nouvel anneau de retenue, notamment lorsque ces opérations sont réalisées alors que la turbomachine est placée verticalement, amont vers le haut.

Suivant un mode de réalisation de l'invention, le flanc a une première zone de contact configurée pour coopérer avec la pluralité de gorges amont.

Suivant un mode de réalisation de l'invention, chaque clip a une première partie d'extrémité, qui est libre et qui est configurée pour pouvoir être insérée respectivement dans un évidement latéral de chaque élément amortisseur.

Suivant un mode de réalisation de l'invention, la première partie d'extrémité présente une deuxième zone de contact avec l'élément amortisseur.

Suivant un mode de réalisation de l'invention, la première partie d'extrémité est raccordée à une deuxième partie d'extrémité du clip et la deuxième partie d'extrémité est fixée au flanc.

Suivant un mode de réalisation de l'invention, la première partie d'extrémité est plus épaisse que la deuxième partie d'extrémité.

Suivant un mode de réalisation de l'invention, la deuxième partie d'extrémité et le flanc délimitent une fente permettant le montage du secteur de bague dans la gorge amont.

Suivant un mode de réalisation de l'invention, les clips sont montés en précontrainte vers le haut par rapport au secteur de bague.

Suivant un mode de réalisation de l'invention, la pluralité de clips est répartie sur une plage angulaire circonférentielle, qui est supérieure ou égale à 10° et inférieure ou égale à 30°.

Un deuxième objet de l'invention est un procédé de démontage d'une roue à aubes de turbomachine, caractérisé en ce que
au cours d'une première étape, on dispose la roue à aubes autour d'un axe vertical avec l'amont de la roue tourné vers le haut, les aubes de la roue étant montées circonférentiellement autour d'un disque de la roue, la roue comportant pour chaque aube un élément amortisseur disposé dans une cavité débouchante radialement vers l'intérieur, qui est délimitée par une plateforme de l'aube et par une paroi intérieure amont de l'aube se terminant par une gorge amont, l'anneau aval de retenue étant logé dans une gorge aval de la plateforme de l'aube, la gorge amont et la gorge aval s'étendant radialement,
au cours d'une deuxième étape postérieure à la première étape, on retire le disque,
au cours d'une troisième étape postérieure à la deuxième étape, on monte coaxialement à l'axe vertical le flanc du dispositif de maintien tel que décrit ci-dessus dans la pluralité des gorges amont adjacentes circonférentiellement et la pluralité des clips du dispositif de maintien contre la pluralité des éléments amortisseurs pour retenir la pluralité des éléments amortisseurs,
au cours d'une quatrième étape postérieure à la troisième étape, on retire l'anneau aval de retenue,
au cours d'une cinquième étape postérieure à la quatrième étape, on monte un nouvel anneau aval de retenue dans la gorge aval,
au cours d'une sixième étape postérieure à la cinquième étape, on replace le disque dans la roue à aubes contre le nouvel anneau aval de retenue.

L'invention sera mieux comprise à la lecture de la description qui va suivre, donnée uniquement à titre d'exemple non limitatif en référence aux figures des dessins annexés, sur lesquelles :
la figure 1 représente schématiquement en coupe axiale partielle un exemple de turbomachine,
la figure 2 représente schématiquement en coupe axiale partielle un exemple de turbine basse pression de la turbomachine de la figure 1,
la figure 3 représente schématiquement en coupe axiale partielle un exemple de roue à aubes de la turbine basse pression de la figure 2,
la figure 4 représente schématiquement en vue en perspective un dispositif de maintien suivant un mode de réalisation de l'invention,
la figure 5 représente schématiquement en vue en perspective un dispositif de maintien suivant le mode de réalisation de l'invention de la figure 4,
la figure 6 représente schématiquement en coupe axiale le dispositif de maintien des figures 4 et 5 monté dans une roue à aubes de la figure 3, suivant un mode de réalisation de l'invention,
la figure 7 représente un organigramme d'un procédé de démontage de la roue à aubes de la figure 3, utilisant le dispositif de maintien des figures 4 et 5, suivant un mode de réalisation de l'invention.

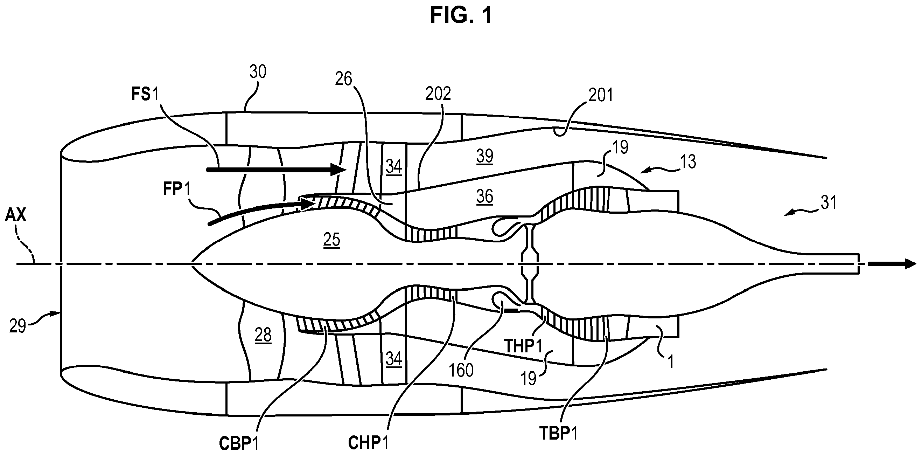

Ainsi que cela est connu, la turbomachine 1 représenté à la figure 1 est destinée à être installée sur un aéronef non représenté pour le propulser dans les airs. L'ensemble moteur à turbine à gaz ou turbomachine 1 a un axe longitudinal AX, orienté de l'amont vers l'aval. La direction allant de l'intérieur vers l'extérieur est la direction radiale partant de l'axe longitudinal AX. Le terme axialement désigne une direction suivant l'axe longitudinal AX. La turbomachine 1 est par exemple à double corps. La turbomachine 1 comprend un ensemble de soufflante 28 et un moteur à turbine à gaz central 13. Le moteur à turbine à gaz central 13 comprend, de l'amont vers l'aval dans le sens d'écoulement des gaz, un compresseur basse pression CBP1, un compresseur haute pression CHP1, une chambre de combustion 160, une turbine haute pression THP1 et une turbine basse pression TBP1 qui délimitent un flux primaire de gaz FP1. L'ensemble de soufflante 28 comprend un ensemble de pales de soufflante s'étendant radialement vers l'extérieur depuis un rotor 25. La turbomachine 1 a une extrémité amont d'admission 29 et une extrémité aval d'échappement 31. La turbomachine 1 comprend également un carter inter-veine 36 qui délimite une veine primaire dans laquelle circule le flux primaire FP1 qui traverse le compresseur haute pression CHP1, la turbine haute pression THP1 et la turbine basse pression TBP1. Le carter inter-veine 36 comporte un carter intermédiaire 26, qui est interposé entre le compresseur basse pression CBP1 et le compresseur haute pression CHP1. La turbine haute pression THP1 est solidaire du compresseur haute pression CHP1 de manière à former un corps haute pression, tandis que la turbine basse pression TBP1 est solidaire du compresseur basse pression CBP1 de manière à former un corps basse pression, de sorte que chaque turbine entraîne le compresseur associé en rotation autour de l'axe AX sous l'effet de la poussée des gaz provenant de la chambre de combustion 160.

En fonctionnement, l'air s'écoule à travers l'ensemble de soufflante 28 et une première partie FP1 (flux primaire FP1) du flux d'air est acheminée à travers le compresseur haute pression CHP1, dans lequel le flux d'air est comprimé et envoyé à la chambre de combustion 160. Les produits de combustion chauds (non représentés sur les figures) provenant de la chambre de combustion 160 sont utilisés pour entraîner les turbines THP1 et TBP1 et produire ainsi la poussée de la turbomachine 1. La turbomachine 10 comprend également une veine secondaire 39 qui est utilisée pour faire passer un flux secondaire FS1 du flux d'air évacué de l'ensemble de soufflante 28 autour du carter inter-veine 36. Plus précisément, la veine secondaire 39 s'étend entre une paroi interne 201 d'un carénage 30 de soufflante ou nacelle 30 et le carter inter-veine 36 entourant le moteur à turbine à gaz central 13. Des bras 34 relient le carter intermédiaire 26 à la paroi interne 201 du carénage 30 dans la veine secondaire 39 du flux secondaire FS1.

Dans ce qui suit, la ou les roues à aubes peuvent être par exemple celle(s) de la turbine basse pression TBP1. Bien entendu, la ou les roues à aubes peuvent appartenir à des parties de la turbomachine 1, autres que la turbine basse pression TBP1.

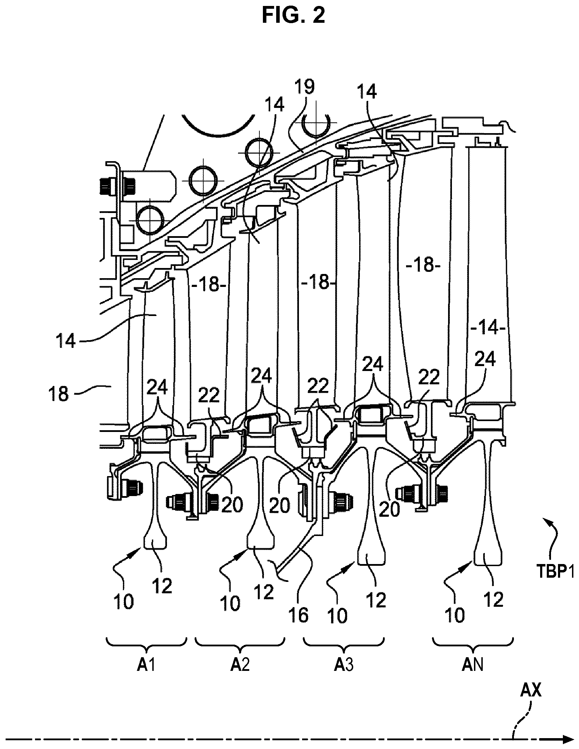

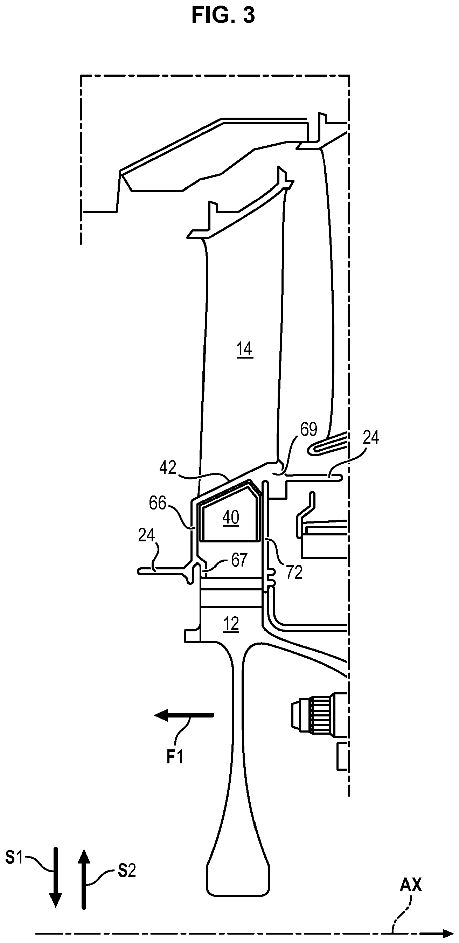

Aux figures 2 et 3, le rotor de la turbine basse pression TBP1 comprend plusieurs (N) étages successifs A1, A2, A3,... AN de l'amont vers l'aval. Les N étages A1, A2, A3,... AN comportent respectivement N roues 10 assemblées axialement les unes aux autres par des brides annulaires et comportant chacune un disque 12 portant des aubes 14 individuelles, disposées circonférentiellement autour du disque 12 et s'étendant radialement. Chaque étage A1, A2, A3,... AN comporte un distributeur formé d'une rangée annulaire d'aubes fixes 18 et une roue 10 à aubes 14, laquelle est montée rotative autour de l'axe longitudinale AX et se trouve en général en aval du distributeur. Ces aubes 14 comprennent chacune une pale reliée par une plate-forme 42 à un pied qui est par exemple en queue d'aronde ou analogue, et qui est engagé dans une rainure longitudinale formée à la périphérie externe du disque 12. Les rainures de logement des pieds d'aubes définissent entre elles des dents qui sont entourées par les plates-formes 42 des aubes. Le rotor est relié à l'arbre de turbine par l'intermédiaire d'un cône d'entraînement 16. Entre les roues 10 se trouvent les rangées annulaires d'aubes fixes 18 qui sont montées par des moyens appropriés à leurs extrémités radialement externes sur un carter 19 de la turbine basse pression TBP1, fixé au carter inter-veine 36. Les aubes fixes 18 de chaque rangée sont réunies entre elles à leurs extrémités radialement internes par des secteurs annulaires 20 placés circonférentiellement bout à bout. Des becquets ou rebords circonférentiels 22 amont et aval sont formés en saillie axiale sur les secteurs annulaires 20, et constituent des chicanes avec d'autres becquets ou rebords circonférentiels 24 amont et aval des plates-formes 42 des aubes 14, pour limiter le passage des gaz de combustion, provenant de la chambre 160 de combustion en amont de la turbine TBP1, radialement de l'extérieur vers l'intérieur.

Dans chaque roue 10, les aubes 14 sont maintenues en position grâce au disque 12, dans lequel elles sont insérées, et sont bloquées suivant l'axe longitudinal AX par un anneau 72 de retenue. La roue 10 comporte pour chaque aube 14 un élément amortisseur 40 disposé dans une cavité 45. Dans chaque aube 14, au niveau de son pied, les éléments amortisseurs 40 ont pour fonction principale de réduire les modes de vibration des aubes 14 lors du fonctionnement de la turbomachine 1. Les éléments amortisseurs 40 sont montés dans les cavités latérales 45 des aubes 14, également appelés logements 45, situées en regard des plates-formes 42 des aubes 14. Ces éléments amortisseurs 40 peuvent également servir d'organes d'étanchéité. Ces éléments amortisseurs 40 épousent avec de faibles jeux la forme interne des cavités 45. Chaque cavité latérale 45 est débouchante radialement vers l'intérieur, c'est-à-dire que chaque cavité latérale 45 a une ouverture 47 tournée vers un premier sens S1 déterminé, qui est le sens centripète orienté vers l'axe AX longitudinal. Chaque cavité latérale 45 est délimitée par la plate-forme 42, par une paroi intérieure amont 66 reliée à la plate-forme 42 et par une paroi intérieure aval 68 reliée à la plate-forme 42 et située à distance de la paroi intérieure amont 66. La paroi intérieure amont 66 se termine dans le premier sens S1 par une gorge amont 67 s'étendant radialement et ouverte dans le premier sens S1. La paroi intérieure aval 68 forme ou comporte une gorge aval 69 s'étendant radialement et ouverte dans le premier sens S1. L'anneau aval 72 de retenue est inséré par son bord extérieur dans la gorge aval 69. En fonctionnement, les éléments amortisseurs 40 sont soumis aux forces centrifuges et sont plaqués radialement contre les plates-formes 42, empêchant ainsi le passage radial de gaz chauds de la veine au niveau des zones d'appui.

Le procédé de démontage de l'anneau aval 72 de retenue est le suivant, suivant un mode de réalisation de l'invention. Ce démontage est effectué pour remplacer l'anneau aval 72 de retenue dans la turbomachine 1, lorsque cet anneau aval 72 de retenue est usé.

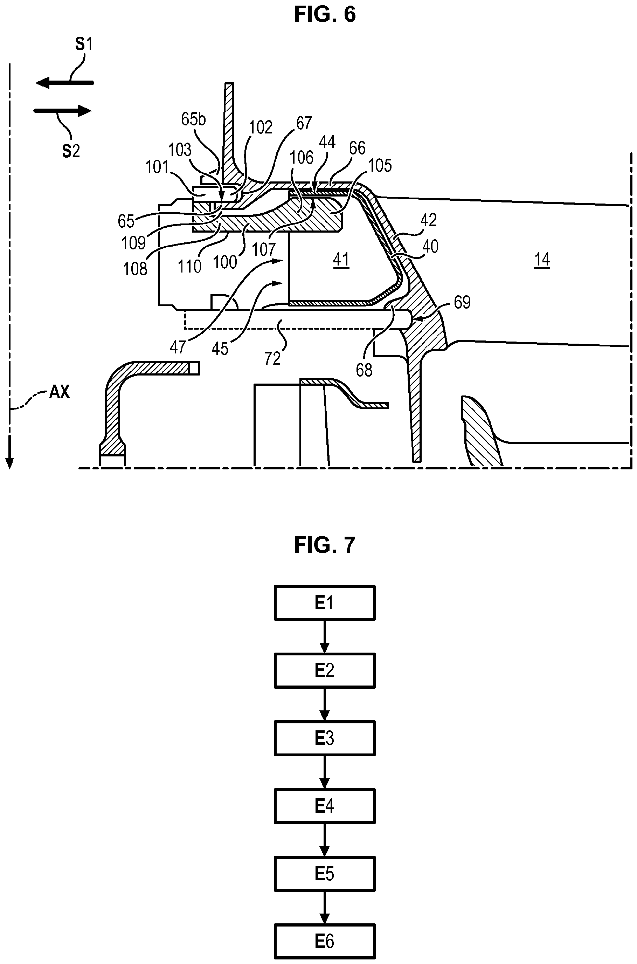

Pour démonter l'anneau aval 72 de retenue et le changer, on dispose la turbomachine pour avoir la roue 10 à aubes 14 à l'horizontale, c'est-à-dire avec l'axe longitudinal AX vertical orienté vers le bas, et donc avec l'amont vers le haut et l'aval vers le bas, la roue 10 à aubes 14 étant donc disposée autour de l'axe Z vertical ascendant, orienté dans le sens inverse de l'axe AX, ainsi que représenté à la figure 6, au cours d'une première étape E1 représentée à la figure 7.

Puis, au cours d'une deuxième étape, on retire le disque 12 en le déplaçant par l'amont par rapport à la turbomachine 1, ainsi que représenté par la flèche épaisse F1 à la figure 3, c'est-à-dire vers le haut.

La largeur radiale des roues 10, des plates-formes 42, des anneaux aval 72 de retenue et des disques 12 va en croissant d'un étage au suivant de l'amont vers l'aval. Ainsi, suivant un mode de réalisation, pour démonter le disque 12 d'un étage déterminé, on démonte d'abord le disque 12 du ou des étages situés en amont par rapport à cet étage déterminé.

Puis, au cours d'une troisième étape E3 postérieure à la deuxième étape E2, on insère le dispositif 100 de maintien suivant l'invention dans le logement 45 pour maintenir dans leur position initiale de montage les éléments amortisseurs 40 de la roue 10 à aubes 14. Le dispositif 100 de maintien se place dans la géométrie en forme de crochet (gorge amont 67) à l'amont des aubes mobiles 14 (arrêt axial) et vient plaquer les éléments amortisseurs 40 à l'amont de la cavité 45 inter-aubes qui leur sert de logement. Le dispositif 100 de maintien peut être prévu sous la forme d'un outillage amovible.

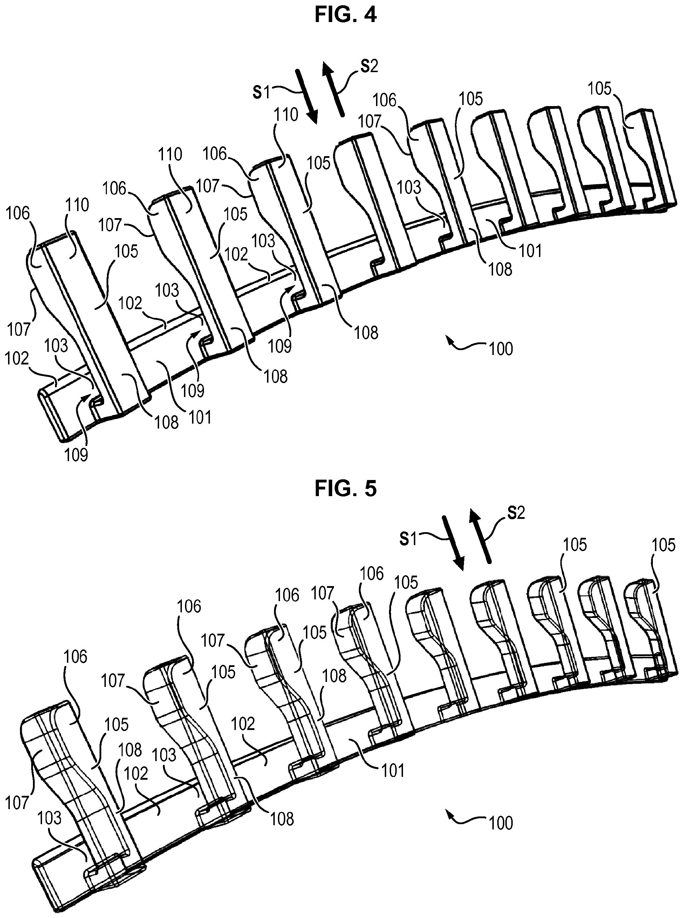

Ce dispositif 100 de maintien est décrit ci-dessous, en référence aux figures 4, 5 et 6.

Le dispositif 100 de maintien comporte un secteur 101 de bague inter-aubes s'étendant circonférentiellement, et par exemple ayant une étendue partiellement circonférentielle, c'est-à-dire pour s'étendre sur une partie de la circonférence des aubes 14. Ce secteur 101 de bague a un flanc 102 s'étendant radialement. Le flanc 102 a ou forme un bord extérieur libre, c'est-à-dire tourné dans un deuxième sens S2 (centrifuge par rapport à l'axe AX) inverse du premier sens déterminé S1. Le secteur 101 de bague est configuré pour que le flanc 102 puisse être inséré dans une pluralité des gorges amont 67 adjacentes circonférentiellement, représentant une partie de l'ensemble des gorges amont 67 de la roue 10. Le secteur 101 de bague inter-aubes a par exemple une section axiale (dans un plan de coupe contenant la direction axiale AX à la figure 6), qui est oblongue et notamment rectiligne. Le secteur 101 de bague est par exemple en forme d'arc de cercle.

Sous le secteur de bague 101 sont fixés une pluralité de clips latéraux 105 de retenue individuelle, pour retenir respectivement une pluralité des éléments amortisseurs 40. Le flanc 102 est axialement en face des clips 105. Le flanc 102 est par exemple axialement en face d'une partie 108 qui sera décrite ci-dessous. Les clips latéraux 105 forment des pattes dépassant sous le secteur 101 de bague radialement vers l'extérieur, c'est-à-dire dans le deuxième sens S2. Les clips latéraux 105 sont espacés entre eux, de la même manière que l'espacement entre les parois 66 des aubes 14 adjacentes. La pluralité de clips latéraux 105 de chaque dispositif 100 de maintien est répartie sur une plage angulaire circonférentielle, qui est supérieure ou égale à 10° et inférieure ou égale à 30° et notamment supérieure ou égale à 15° et inférieure ou égale à 25°. On maintient ainsi en place un assez grand nombre (pouvant par exemple aller jusqu'à 9 ou 10) d'éléments amortisseurs 40 à la fois par un seul dispositif 100 de maintien, tout en faisant que ce dispositif 100 de maintien soit montable et démontable sur la roue 10. Selon un exemple non limitatif, la pluralité de clips latéraux 105 de chaque dispositif 100 de maintien est répartie sur une plage angulaire circonférentielle d'environ 20°.

Ainsi, lors de la troisième étape E3, on insère le flanc 102 dans la pluralité des gorges amont 67 adjacentes circonférentiellement et on insère la pluralité des clips latéraux 105 contre la pluralité des éléments amortisseurs 40 pour les retenir dans leur position de montage dans leur logement 45 dans la roue 10. Les clips 105 et le secteur de bague 101 sont en une matière suffisamment rigide pour ne pas se déformer sous le poids des éléments amortisseurs 40. Ainsi, on insère par exemple plusieurs dispositifs 100 de maintien l'un à la suite de l'autre circonférentiellement pour maintenir en position de montage l'ensemble des éléments amortisseurs 40 dans la roue 10.

Puis, au cours d'une quatrième étape E4, on retire l'anneau 72 aval de retenue (ancien anneau 72 aval de retenue), à savoir par l'amont par rapport à la turbomachine 1, c'est-à-dire en déplaçant l'anneau 72 aval de retenue vers le haut.

Puis, au cours d'une cinquième étape E5, on insère un nouvel anneau 72 aval de retenue dans la gorge aval 69. On remplace ainsi l'anneau 72 aval de retenue initial, qui est usé, par ce nouvel anneau 72 aval de retenue.

Puis, au cours d'une sixième étape E6, on replace le disque 12 dans la roue 10 à aubes 14 contre le nouvel anneau 72 aval de retenue.

Le procédé suivant l'invention permet ainsi de retirer l'anneau 72 aval de retenue sans démonter le reste de la turbine TBP1. L'invention permet ainsi de retirer d'abord l'anneau 72 aval de retenue du premier étage A1 situé le plus en amont, sans avoir à démonter les autres étages A2, A3, ..., AN. On évite ainsi de devoir désempiler les différents étages AN, ..., A3, A2, A1 dans cet ordre de l'aval vers l'amont (du plus large radialement vers le moins large), ce qui économise en coûts de démontage et en temps de démontage. Le dispositif 100 de maintien suivant l'invention permet de maintenir en place les éléments amortisseurs 40 en l'absence de l'anneau aval 72 de retenue, lorsque la turbomachine est dans la position verticale décrite ci-dessus et malgré le fait que l'espace disponible soit très restreint et confiné. Le dispositif 100 de maintien permet ainsi d'empêcher les éléments amortisseurs 40 de tomber et de s'accrocher aux autres aubes 14 et 18.

Bien entendu, d'autres étapes peuvent être prévues avant, après ou entre les étapes E1 à E6 décrites ci-dessus. Après l'étape E6, on enlève ensuite de la roue 10 le ou les dispositifs 100 de maintien.

Suivant un mode de réalisation de l'invention, le flanc 102 a une première zone 103 de contact configurée pour coopérer avec la pluralité des gorges amont 67. En référence à la figure 6, la première zone 103 de contact est une première zone inférieure ou aval 103 de contact pour être en contact sur une partie inférieure ou aval 65 de la pluralité des aubes 14, cette partie inférieure 65 délimitant la pluralité des gorges amont 67. Cette partie inférieure 65 est un premier rebord intérieur aval, qui est raccordé à la paroi intérieure aval 66 et est située en aval et en face d'un premier rebord intérieur amont 65b, ce premier rebord intérieur aval 65 et ce premier rebord intérieur amont 65b délimitant la gorge amont 67. On assure ainsi un appui ferme du dispositif de maintien contre l'aube 14.

Suivant un mode de réalisation de l'invention, chaque clip 105 a une première partie 106 d'extrémité, qui est libre et qui est configurée pour pouvoir être insérée respectivement dans un évidement latéral 41 de chaque élément amortisseur 40. Chaque élément amortisseur 40 possède un évidement latéral 41 débouchant radialement vers l'intérieur, c'est-à-dire tourné dans le premier sens S1. Cet évidement latéral 41 est par exemple délimité vers le haut, c'est-à-dire vers l'amont, par une partie 44 de l'élément amortisseur 40. Dans ce cas, par exemple, la première partie 106 d'extrémité a une deuxième zone 107 de contact avec l'élément amortisseur 40. La deuxième zone 107 de contact est par exemple une deuxième zone supérieure ou amont 107 de contact, qui est mise en contact avec l'élément amortisseur 40, à savoir en aval ou sous la partie 44 de l'élément amortisseur 40. Le dispositif 100 de maintien assure ainsi une force de soulèvement de l'élément amortisseur 40.

Suivant un mode de réalisation de l'invention, les clips 105 sont montés en précontrainte vers le haut ou vers l'amont par rapport au secteur de bague 101. Le dispositif 100 de maintien assure ainsi une force de maintien du secteur 101 de bague contre la partie 65 (vers le bas), conjuguée avec une force de maintien du clip 105 axialement sous la partie 44 de l'élément amortisseur 40 en sens inverse (vers le haut), ce qui renforce à la fois le placage des éléments amortisseurs 40 dans le logement 45 contre la plate-forme 66 et l'immobilisation du dispositif 100 de maintien sur la roue 10. Par exemple, les clips 105 et le secteur de bague 101 peuvent être d'une seule pièce. Par exemple, les clips 105 et le secteur de bague 101 peuvent être en une matière synthétique, ayant une certaine élasticité pour rappeler les clips 105 vers le haut par rapport au secteur de bague 101 et pour permettre le montage du dispositif 100 de maintien sur la roue 1.

Suivant un mode de réalisation de l'invention, la première partie 106 d'extrémité est raccordée à la deuxième partie 108 d'extrémité du clip 105. Cette deuxième partie 108 d'extrémité est fixée sous le secteur de bague 101 et donc au flanc 102. La deuxième partie 108 d'extrémité est située dans le premier sens S1 par rapport à la première partie 106 d'extrémité. Par exemple, la première partie 106 d'extrémité est plus épaisse que la deuxième partie 108 d'extrémité dans la direction de l'axe longitudinal AX allant de haut en bas. Chaque clip 105 a par exemple une forme oblongue dans le deuxième sens S2 et va par exemple en s'épaississant de la deuxième partie 108 d'extrémité vers la première partie 106 d'extrémité. La première partie 106 d'extrémité a par exemple une épaisseur constante sous la deuxième zone supérieure 107 ou amont de contact. Le clip 105 peut avoir un dos plat 110 sur sa surface inférieure ou aval.

Suivant un mode de réalisation de l'invention, la deuxième partie 108 d'extrémité et le secteur de bague 101 délimitent une fente 109 de passage de la partie inférieure ou aval 65 d'une aube 14.

Bien entendu, les modes de réalisation, caractéristiques, possibilités et exemples ci-dessus peuvent être combinés l'un avec l'autre ou être sélectionnés indépendamment l'un de l'autre.

## Revendications

1. Dispositif de maintien pour le démontage d'une roue (10) à aubes (14) de turbomachine afin d'ôter un anneau (72) aval de retenue de la roue (10), lorsque la roue (10) à aubes (14) est disposée autour d'un axe (Z) vertical avec l'amont de la roue (10) tourné vers le haut,
les aubes (14) de la roue (10) s'étendant radialement et étant destinées à être montées circonférentiellement autour d'un disque (12) de la roue (10), la roue (10) comportant pour chaque aube (14) un élément amortisseur (40) disposé dans une cavité (45) débouchante radialement vers l'intérieur, laquelle est délimitée par une plateforme (42) de l'aube (14) et par une paroi intérieure amont (66) de l'aube (14) se terminant par une gorge amont (67), l'anneau (72) aval de retenue étant logé dans une gorge aval (69) de la plateforme (42) de l'aube (14), la gorge amont (67) et la gorge aval (69) s'étendant radialement,
**caractérisé en ce que** le dispositif (100) de maintien est destiné à être monté coaxialement à l'axe (Z) vertical et comporte :
un secteur de bague (101) inter-aubes, qui s'étend circonférentiellement et comprend un flanc (102) s'étendant radialement, le secteur de bague (101) étant configuré pour que le flanc (102) puisse être inséré dans une pluralité des gorges amont (67) adjacentes circonférentiellement, et
une pluralité de clips (105) de retenue, chaque clip (105) étant destiné à coopérer avec un des éléments amortisseurs (40), les clips (105) s'étendant radialement en étant fixés circonférentiellement au secteur de bague (101).

2. Dispositif suivant la revendication 1, **caractérisé en ce que** le flanc (102) a une première zone (103) de contact configurée pour coopérer avec la pluralité de gorges amont (67).

3. Dispositif suivant l'une quelconque des revendications précédentes, **caractérisé en ce que** chaque clip (105) a une première partie (106) d'extrémité, qui est libre et qui est configurée pour pouvoir être insérée respectivement dans un évidement latéral (41) de chaque élément amortisseur (40).

4. Dispositif suivant la revendication 3, **caractérisé en ce que** la première partie (106) d'extrémité présente une deuxième zone (107) de contact avec l'élément amortisseur (40).

5. Dispositif suivant la revendication 3 ou 4, **caractérisé en ce que** la première partie (106) d'extrémité est raccordée à une deuxième partie (108) d'extrémité du clip et la deuxième partie (108) d'extrémité est fixée au flanc (102).

6. Dispositif suivant la revendication 5, **caractérisé en ce que** la première partie (106) d'extrémité est plus épaisse que la deuxième partie (108) d'extrémité.

7. Dispositif suivant la revendication 5 ou 6, **caractérisé en ce que** la deuxième partie (108) d'extrémité et le flanc (102) délimitent une fente (109) permettant le montage du secteur de bague (101) dans la gorge amont (67).

8. Dispositif suivant l'une quelconque des revendications précédentes, **caractérisé en ce que** les clips (105) sont montés en précontrainte vers le haut par rapport au secteur de bague (101).

9. Dispositif suivant l'une quelconque des revendications précédentes, **caractérisé en ce que** la pluralité de clips (105) est répartie sur une plage angulaire circonférentielle, qui est supérieure ou égale à 10° et inférieure ou égale à 30°.

10. Procédé de démontage d'une roue (10) à aubes (14) de turbomachine, **caractérisé en ce que**
au cours d'une première étape (E1), on dispose la roue (10) à aubes (14) autour d'un axe (Z) vertical avec l'amont de la roue (10) tourné vers le haut, les aubes (14) de la roue (10) étant montées circonférentiellement autour d'un disque (12) de la roue (10), la roue (10) comportant pour chaque aube (14) un élément amortisseur (40) disposé dans une cavité (45) débouchante radialement vers l'intérieur, qui est délimitée par une plateforme (42) de l'aube (14) et par une paroi intérieure amont (66) de l'aube (14) se terminant par une gorge amont (67), l'anneau (72) aval de retenue étant logé dans une gorge aval (69) de la plateforme (42) de l'aube (14), la gorge amont (67) et la gorge aval (69) s'étendant radialement,
au cours d'une deuxième étape (E2) postérieure à la première étape (E1), on retire le disque (12),
au cours d'une troisième étape (E3) postérieure à la deuxième étape (E2), on monte coaxialement à l'axe (Z) vertical le flanc (102) du dispositif (100) de maintien suivant l'une quelconque des revendications précédentes dans la pluralité des gorges amont (67) adjacentes circonférentiellement et la pluralité des clips (105) du dispositif (100) de maintien contre la pluralité des éléments amortisseurs (40) pour retenir la pluralité des éléments amortisseurs (40),
au cours d'une quatrième étape (E4) postérieure à la troisième étape (E3), on retire l'anneau (72) aval de retenue,
au cours d'une cinquième étape (E5) postérieure à la quatrième étape (E4), on monte un nouvel anneau (72) aval de retenue dans la gorge aval (69),
au cours d'une sixième étape (E6) postérieure à la cinquième étape (E5), on replace le disque (12) dans la roue (10) à aubes (14) contre le nouvel anneau (72) aval de retenue.

## Patentansprüche

1. Haltevorrichtung zur Demontage eines Rades (10) mit Turbomaschinenschaufeln (14), um einen stromabwärtigen Tragring (72) des Rades (10) abzunehmen, wenn das Rad (10) mit Schaufeln (14) um eine vertikale Achse (Z) herum mit dem nach oben orientierten stromaufwärtigen Teil des Rades (10) angeordnet ist,
wobei die Schaufeln (14) des Rades (10) sich radial erstrecken und dazu bestimmt sind, umlaufend um eine Scheibe (12) des Rades (10) montiert zu sein, wobei das Rad (10) für jede Schaufel (14) ein Dämpfungselement (40) umfasst, das in einem radial nach innen mündenden Hohlraum (45) angeordnet ist, der durch eine Plattform (42) der Schaufel (14) und durch eine stromaufwärtige Innenwand (66) der Schaufel (14) begrenzt ist, die mit einer stromaufwärtigen Nut (67) endet, wobei der stromabwärtige Tragring (72) in einer stromabwärtigen Nut (69) der Plattform (42) der Schaufel (14) untergebracht ist, wobei die stromaufwärtige Nut (67) und die stromabwärtige Nut (69) sich radial erstrecken,
**dadurch gekennzeichnet, dass** die Haltevorrichtung (100) dazu bestimmt ist, koaxial zur vertikalen Achse (Z) montiert zu sein, und umfasst:
einen Ringsektor (101) zwischen Schaufeln, der sich umlaufend erstreckt und eine Flanke (102) umfasst, die sich radial erstreckt, wobei der Ringsektor (101) so ausgestaltet ist, dass die Flanke (102) in eine Vielzahl der umlaufend benachbarten stromaufwärtigen Nuten (67) eingesetzt werden kann, und
eine Vielzahl von Halte-Clips (105), wobei jeder Clip (105) dazu bestimmt ist, mit einem der Dämpfungselemente (40) zusammenzuwirken, wobei die Clips (105) sich radial erstrecken und dabei umlaufend an dem Ringsektor (101) befestigt sind.

2. Vorrichtung nach Anspruch 1, **dadurch gekennzeichnet, dass** die Flanke (102) eine erste Kontaktzone (103) aufweist, die dazu ausgestaltet ist, mit der Vielzahl von stromaufwärtigen Nuten (67) zusammenzuwirken.

3. Vorrichtung nach einem beliebigen der vorhergehenden Ansprüche, **dadurch gekennzeichnet, dass** jeder Clip (105) einen ersten Endteil (106) aufweist, der frei ist und der dazu ausgestaltet ist, jeweils in eine seitliche Aussparung (41) von jedem Dämpfungselement (40) eingesetzt zu werden.

4. Vorrichtung nach Anspruch 3, **dadurch gekennzeichnet, dass** der erste Endteil (106) eine zweite Kontaktzone (107) mit dem Dämpfungselement (40) aufweist.

5. Vorrichtung nach Anspruch 3 oder 4, **dadurch gekennzeichnet, dass** der erste Endteil (106) mit einem zweiten Endteil (108) des Clips verbunden ist und der zweite Endteil (108) an der Flanke (102) befestigt ist.

6. Vorrichtung nach Anspruch 5, **dadurch gekennzeichnet, dass** der erste Endteil (106) dicker als der zweite Endteil (108) ist.

7. Vorrichtung nach Anspruch 5 oder 6, **dadurch gekennzeichnet, dass** der zweite Endteil (108) und die Flanke (102) einen Schlitz (109) abgrenzen, der die Montage des Ringsektors (101) in der stromaufwärtigen Nut (67) ermöglicht.

8. Vorrichtung nach einem beliebigen der vorhergehenden Ansprüche, **dadurch gekennzeichnet, dass** die Clips (105) in Bezug auf den Ringsektor (101) nach oben vorgespannt montiert sind.

9. Vorrichtung nach einem beliebigen der vorhergehenden Ansprüche, **dadurch gekennzeichnet, dass** die Vielzahl von Clips (105) auf einem umlaufenden Winkelbereich verteilt sind, der größer oder gleich 10° und kleiner oder gleich 30° ist.

10. Verfahren zur Demontage eines Rades (10) mit Turbomaschinenschaufeln (14), **dadurch gekennzeichnet, dass**
während eines ersten Schrittes (E1) das erste Rad (10) mit Schaufeln (14) mit dem nach oben orientierten stromaufwärtigen Teil des Rades (10) um eine vertikale Achse (Z) herum angeordnet wird, wobei die Schaufeln (14) des Rades (10) umlaufend um eine Scheibe (12) des Rades (10) montiert sind, das Rad (10) für jede Schaufel (14) ein Dämpfungselement (40) umfasst, das in einem radial nach innen mündenden Hohlraum (45) angeordnet ist, der von einer Plattform (42) der Schaufel (14) und von einer stromaufwärtigen Innenwand (66) der Schaufel (14) begrenzt ist, die mit einer stromaufwärtigen Nut (67) endet, wobei der stromabwärtige Tragring (72) in einer stromabwärtigen Nut (69) der Plattform (42) der Schaufel (14) untergebracht ist, wobei die stromaufwärtige Nut (67) und die stromabwärtige Nut (69) sich radial erstrecken,
während eines zweiten Schritts (E2) nach dem ersten Schritt (E1) die Scheibe (12) abgenommen wird,
während eines dritten Schritts (E3) nach dem zweiten Schritt (E2) die Flanke (102) der Haltevorrichtung (100) nach einem beliebigen der vorhergehenden Ansprüche koaxial zur vertikalen Achse (Z) in der Vielzahl der umlaufend benachbarten stromaufwärtigen Nuten (67) und der Vielzahl von Clips (105) der Haltevorrichtung (100) gegen die Vielzahl der Dämpfungselemente (40) montiert wird, um die Vielzahl der Dämpfungselemente (40) zu halten,
während eines vierten Schritts (E4) nach dem dritten Schritt (E3) der stromabwärtige Tragring (72) abgenommen wird,
während eines fünften Schritts (E5) nach dem vierten Schritt (E4) ein neuer stromabwärtiger Tragring (72) in der stromabwärtigen Nut (69) montiert wird,
während eines sechsten Schritts (E6) nach dem fünften Schritt (E5) die Scheibe (12) erneut in dem Rad (10) mit Schaufeln (14) gegen den neuen stromabwärtigen Tragring (72) platziert wird.

## Claims

1. A retaining device for disassembling a wheel (10) having blades (14) of a turbine engine in order to remove a downstream retaining ring (72) of the wheel (10) when the wheel (10) having blades (14) is disposed around a vertical axis (Z) with the upstream side of the wheel (10) turned upward,
the blades (14) of the wheel (10) extending radially and being intended to be mounted circumferentially around a disk (12) of the wheel (10), the wheel (10) including, for each blade (14), a damping element (40) disposed in a cavity (45) which opens radially inward and which is delimited by a platform (42) of the blade (14) and by an inner upstream wall (66) of the blade (14) terminating by an upstream groove (67), the downstream retaining ring (72) being housed in a downstream groove (69) of the platform (42) of the blade (14), the upstream groove (67) and the downstream groove (69) extending radially,
**characterized in that** the retaining device (100) is intended to be mounted coaxially with a vertical axis (Z) and includes:
an inter-blade ring sector (101), which extends circumferentially and comprises a flank (102) extending radially, the ring sector (101) being configured so that the flank (102) can be inserted into a plurality of the upstream grooves (67) being circumferentially adjacent.
a plurality of retaining clips (105), each clip (105) being intended to cooperate with one of the damping elements (40), the clips (105) extending radially while being attached circumferentially to the ring sector (101).

2. The device according to claim 1, **characterized in that** the flank (102) has a first contact zone (103) configured to cooperate with the plurality of upstream grooves (67).

3. The device according to any one of the preceding claims, **characterized in that** each clip (105) has a first end portion (106), which is free and which is configured to be able to be inserted respectively into a lateral recess (41) of each damping element (40).

4. The device according to claim 3, **characterized in that** the first end portion (106) has a second zone (107) of contact with the damping element (40).

5. The device according to claim 3 or 4, **characterized in that** the first end portion (106) is connected to a second end portion (108) of the retaining clip, and the second end portion (108) is attached to the flank (102).

6. The device according to claim 5, **characterized in that** the first end portion (106) is thicker than the second end portion (108).

7. The device according to claim 5 or 6, **characterized in that** the second end portion (108) and the flank (102) delimit a slot (109) allowing to mount the ring sector (101) in the upstream groove (67).

8. The device according to any one of the preceding claims, **characterized in that** the clips (105) are prestressed upwardly relative to the ring sector (101).

9. The device according to any one of the preceding claims, **characterized in that** the plurality of clips (105) is distributed over a circumferential angular range which is greater than or equal to 10° and less than or equal to 30°.

10. A method for disassembling a wheel (10) having blades (14) of a turbine engine, comprising:
during a first step (E1), disposing the wheel (10) having blades (14) around a vertical axis (Z) with the upstream side of the wheel (10) turned upward, the blades (14) of the wheel (10) being mounted circumferentially around a disk (12) of the wheel (10), the wheel (10) including, for each blade (14), a damping element (40) disposed in a cavity (45), which opens radially inward and which is delimited by a platform (42) of the blade (14) and by an inner upstream wall (66) of the blade (14) terminating by an upstream groove (67), the downstream retaining ring (72) being housed in a downstream groove (69) of the platform (42) of the blade (14), the upstream groove (67) and the downstream groove (69) extending radially,
during a second step (E2) after the first step (E1), withdrawing the disk (12),
during a third step (E3) after the second step (E2), mounting the flank (102) of the retaining device (100) according to any one of the preceding claims coaxially with the vertical axis (Z) in the plurality of upstream grooves (67) being circumferentially adjacent and mounting the plurality of clips (105) of the retaining device (100) against the plurality of the damping elements (40) to retain the plurality of the damping elements (40),
during a fourth step (E4) after the third step (E3), withdrawing the downstream retaining ring (72),
during a fifth step (E5) after the fourth step (E4), mounting a new downstream retaining ring (72) in the downstream groove (69),
during a sixth step (E6) after the fifth step (E5), replacing the disk (12) against the new downstream retaining ring (72) in the wheel (10) having blades.
